# EUROPEAN PATENT APPLICATION

(11) **EP 3 248 915 A1**
(43) Date of publication of application: **29.11.2017**
(21) Application number: 17171457.9
(22) Date of filing: 17.05.2017
(51) Int. Cl.: B65G 61/00

(54) **APPARATUS FOR SORTING OBJECTS**

(30) Priority: 26.05.2016 IT UA20163824
(71) Applicant: Granitifiandre Societa' Per Azioni, 42014 Castellarano (RE) (IT)
(72) Inventor: MARCHI, Domenico, 42031 BAISO (RE) (IT); ALBERTINI, Claudio, 53048 SINALUNGA (SI) (IT)
(74) Representative: Corradini, Corrado

(57) **Abstract**

An apparatus (100) for sorting objects (800) is described, comprising: a conveyor line (105) adapted to advance the objects (800) to be sorted, at least one carriage (125) adapted to support one or more stacked objects (800), and at least one industrial robot (140) adapted to pick up at least one object (800) at a time from the conveyor line (105) and transfer it onto the carriage (125).

## Description

### Field of the invention

The present invention relates to an apparatus for sorting objects, in particular for sorting generally flat-shaped objects as tiles or any other type of ceramic slab.

### Prior art

It is known that ceramic slabs coming from production facilities are normally made to advance lined up along a continuous conveyor line on which they are mutually spaced.

These ceramic slabs are then "sorted", that is, separated from each other on the basis of at least on predetermined feature, such as the size, type of decoration or others.

Thanks to the sorting, stacks are formed consisting of a predetermined number of ceramic slabs homogeneous features, which can then be packaged.

The sorting and stack forming operations are normally carried out using apparatus able to operate automatically.

One object of the present invention is to provide a sorting apparatus that allows a precise and safe positioning of the objects to be sorted, with a relatively high operating speed and allowing great flexibility of use.

Another object of the present invention is to achieve the above object with a simple and rational solution and as cost-effective as possible.

### Summary of the invention

These and other objects are achieved by the features of the invention as described in the independent claims. The dependent claims describe preferred and/or particularly advantageous aspects of the invention.

In particular, one embodiment of the present invention provides an apparatus for sorting objects, typically ceramic slabs, which comprises:
- a conveyor line adapted to advance the objects to be sorted,
- at least one carriage adapted to support one or more stacked objects, and
- at least one industrial robot, for example a robot with articulated arm, adapted to pick up at least one object at a time from the conveyor line and transfer it onto the carriage.

Thanks to this solution, the objects advancing in a succession along the conveyor line can be picked up by the robot selectively, for example based on their format, to form stacks of homogeneous objects on the carriage.

Optionally, the robot can be configured to pick up objects from the conveyor line that have different features and arrange them onto the carriage grouped in separate stacks, where each stack consists of objects with homogeneous features.

After loading, the carriage can be freely handled and moved away from the conveyor line, for example to transfer the stacks of objects to other operating apparatus.

In this way, the apparatus is therefore able to carry out a safe and precise sorting of the objects, within of a solution that can be easily adapted to the needs of each user.

According to one aspect of the invention, the apparatus may comprise a plurality of carriages, each adapted to support one or more stacked objects.

This effectively increases not only the operational capacity and the speed of the apparatus but also its flexibility.

According to another aspect of the invention, the apparatus may also comprise a plurality of industrial robots, for example a plurality of robots with articulated arm, adapted to pick up the objects in different positions along the conveyor line and transfer them on these said carriages.

Thanks to this solution, each robot can be configured to pick up only a predetermined type of objects from the conveyor line and load these objects on the loading means of a respective carriage, while the objects with different features can be handled by another industrial robot and other self-propelled vehicles, making the whole process much faster and more flexible.

Alternatively, each robot can be configured to also pick up ceramic slabs with different features, optionally arranging them on separate carriages or in different stacks on a same carriage.

Of course, the robots may also be configured to sort the ceramic slabs according to different logics based on the users' needs, ensuring great flexibility.

A particular aspect of the invention contemplates that the apparatus may comprise a plurality of stationing areas arranged by a flank of the conveyor line, each of which is able to be occupied by at least one carriage and internally of each of which each carriage is adapted to receive at least one object on the fly from an industrial robot.

This ensures that the carriages are always placed in precise locations in the operating space of the robot, simplifying the programming of the apparatus and making the operation of the latter safer and more reliable.

In particular, another aspect of the invention provides that said stationing areas can be placed on both flanks of the conveyor line.

This solution effectively increases the efficiency of the apparatus, because each robot is effectively able to sort the objects coming from the conveyor line quite quickly among several carriages.

In order to facilitate the handling of the stacks of objects, each carriage can be a self-propelling vehicle or can be drawn by a self-propelling vehicle. In both cases, said self-propelling vehicle may be an automated guided vehicle (AGV).

In this way, the apparatus can be configured to operate in a totally autonomous manner or nearly so.

According to a different aspect of the invention, the apparatus may further comprise:
- a second conveyor line,
- at least one stationing area arranged by a flank of the second conveyor line and adapted to be occupied by at least one carriage, and
- an industrial robot, such as another robot with articulated arm, adapted to pick up at least one stack of objects which is located in the stationing area and to transfer the stack of objects onto the second conveyor line.

Thanks to this solution, the stacks of homogeneous objects that have been previously loaded to each carriage are transferred on the second conveyor line, from which they can be sent for example to a packaging apparatus.

During this transfer, the objects can also be "unstacked", for example to place stacks onto the second conveyor line consisting of a smaller number of homogeneous objects than that which formed the stacks on the carriage.

In order to increase the system productivity, one aspect of the invention contemplates that the apparatus may comprise two stationing areas by the flank and on opposite sides of the second conveyor line.

### Brief description of the drawings

Further features and advantages of the invention will become apparent from the following description, provided by way of non-limiting example with the aid of the figures shown in the accompanying drawings.

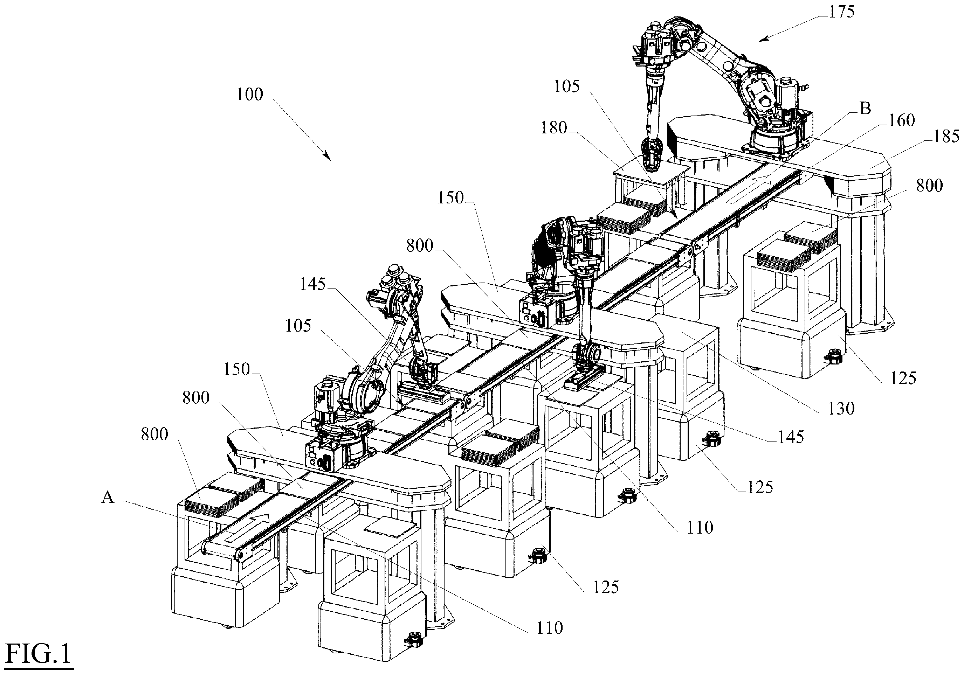

Figure 1 is a perspective view of an apparatus according to an embodiment of the present invention.
Figure 2 is a lateral view of the apparatus in figure 1.
Figure 3 is a plan view of the apparatus in figure 1.

### Detailed description

The above figures show an apparatus 100 for sorting objects, in particular for sorting ceramic slabs 800, such as tiles.

Apparatus 100 comprises a conveyor line, globally indicated with reference numeral 105, which is adapted to advance a row of ceramic slabs 800 along a predetermined horizontal direction A. On the conveyor line 105, the ceramic slabs 800 can be suitably spaced from each other along said advancement direction A.

The conveyor line 105 may for example comprise a conveyor belt or a plurality of conveyor belts 110 arranged mutually in succession so that the ceramic slabs 800 can move from one to the other during their advancement.

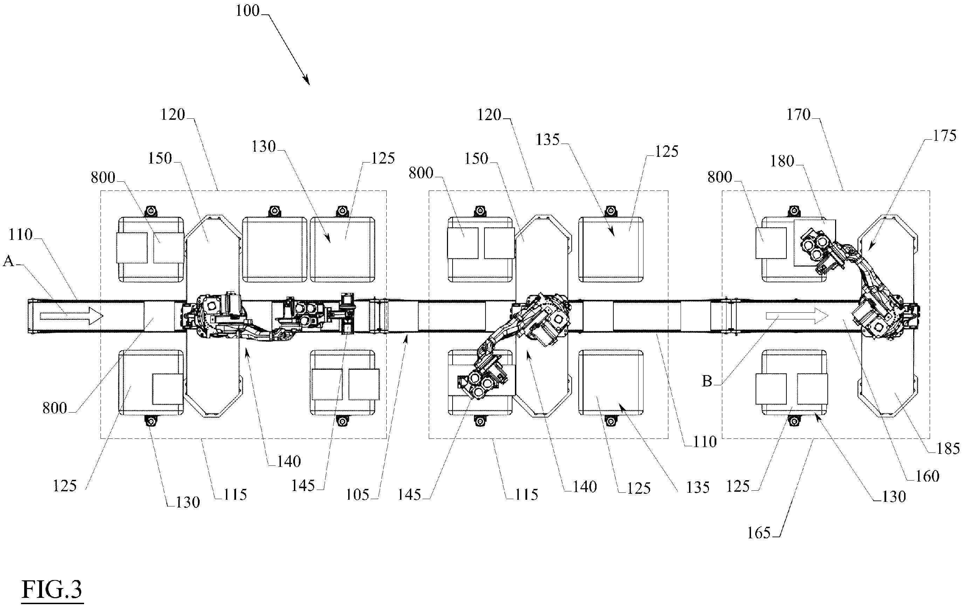

On the floor next to the conveyor line 105, apparatus 100 has a plurality of stationing areas (indicated with a dashed line in figure 3), which are distributed along the conveyor line 105 on both flanks of the same.

In particular, the stationing areas can be divided in pairs, where each pair comprises a first stationing area 115 placed to the right of the conveyor line 105 and a second stationing area 120 opposed to the first one and placed to the left of the conveyor line 105.

Each stationing area 115 and 120 is adapted to be occupied by one or more carriages 125, each of which is provided with a loading platform 130 adapted to receive one or more stacks of ceramic slabs 800 thereon.

The loading platform 130 is preferably configured to be at a lower height than the conveyor line 105, so that carriage 125 (at least when empty) might pass below it.

In particular, the loading platform 130 can be connected to the respective carriage 125 using automated means (not shown) that allow changing the height (elevation) thereof above the ground.

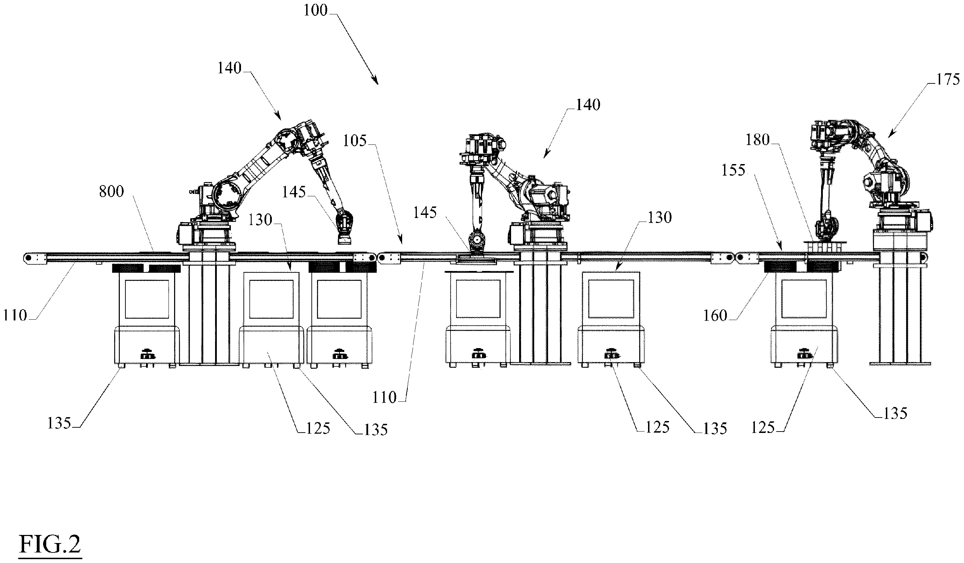

Each carriage is further provided with wheels 135 (see fig. 2), or other locomotion members other than wheels, enabling it to move freely on the floor.

In the example shown, each carriage 125 is a self-propelled vehicle, or a vehicle provided with its own members of locomotion and a motor, such as an electric motor adapted to actuate the locomotion members, namely wheels 135, to allow the autonomous movement of the vehicle on the floor.

In particular, each carriage 125 can be an automated guided vehicle (AGV) 125 guided according to any technology suitable for the purpose (e.g. by laser technology: laser guided vehicle or LGV) and according to a suitable control logic.

In other embodiments, carriages 125 could be vehicles without motor that are adapted to be towed by an independent propelled vehicle, such as by an AGV.

Apparatus 100 further comprises a plurality of industrial robots 140, which are arranged in succession along the conveyor line 105, or at different positions along the advancement direction A of the ceramic slabs 800, and are adapted to selectively pick up the ceramic slabs 800 that advance on the conveyor line 105 to transfer them onto carriages 125 stationed in the stationing areas to the side.

In particular, each industrial robot 140 is adapted to transfer the ceramic slabs 800 onto carriages 125 stationed in a respective pair of opposed stationing areas 115 and 120.

In the example shown, each industrial robot 140 is a robot of the type with articulated arm, preferably with multiple degrees of freedom and respective driving motors.

The free end of this articulated arm bears gripping means 145 adapted to grasp one ceramic slab 800 at a time and hold it during the transfer towards carriage 125.

Said gripping means 145 may for example comprise one or more suction cups (or similar systems) adapted to be made selectively to adhere to the upper surface of the advancing ceramic slabs 800 resting on the conveyor line 105.

In order to perform its function, each industrial robot 140 is installed above the conveyor line 105, in this case above a support structure 150 that surmounts the conveyor line 105, extending as a bridge in a direction perpendicular to the advancement direction A of the ceramic slabs 800.

It is not excluded, however, that in other embodiments the industrial robots 140 may be placed by the flank of the conveyor line 105.

Apparatus 100 further comprises a second conveyor line, globally indicated with reference numeral 155, which is likely adapted to advance stacks of ceramic slabs 800 along a predetermined horizontal direction B.

Advancing along this second conveyor line 155, the stacks of ceramic slabs 800 can be fed to other operating apparatus, such as to a packaging system (not shown).

Also the second conveyor line 155 may comprise a conveyor belt 160 or a plurality of conveyor belts arranged mutually in succession so that the ceramic slabs 800 can move from one to the other during their advancement.

In the example shown, the advancement direction B of the second conveyor line 155 is parallel and substantially aligned in continuation of the advancement direction A of the conveyor line 105.

However, it is not excluded that in other embodiments the advancement direction B may be oriented differently.

On the floor by the flank of the second conveyor line 155, apparatus 100 has two stationing areas (ideally indicated with a dashed line in figure 3), of which a first stationing area 165 placed to the right of the second conveyor line 155 and a second stationing area 170 opposite to the first one and placed to the left of the second conveyor line 155.

Each stationing area 165 and 170 is adapted to be occupied by one or more carriages 125 that have already received one or more stacks of ceramic slabs 800 resting on the relative loading platform 130.

Apparatus 100 further comprises at least one additional industrial robot 175, which is arranged along the second conveyor line 155 and is adapted to pick up the stacks of ceramic slabs 800 from carriages 125 stationed in the stationing areas 165 and 170 for the bulk transfer thereof on the second conveyor line 155.

In the example shown, the industrial robot 175 is also a robot of the type with articulated arm, preferably with multiple degrees of freedom and respective driving motors.

The free end of this articulated arm bears gripping means 180 adapted to grasp the stack of ceramic slabs 800 and hold it during the transfer towards the second conveyor line 155.

These gripping means 180 may for example comprise a clamp device adapted to hold the stack of ceramic slabs 800 sideways, so as to hold them as a whole.

In order to perform its function, the industrial robot 175 is installed above the second conveyor line 155, in this case above a further support structure 185 that surmounts the second conveyor line 155, extending as a bridge in a direction perpendicular to the advancement direction B of the stacks of ceramic slabs 800.

It is not excluded, however, that in other embodiments the industrial robot 175 may be placed by the flank of the second conveyor line 155.

During the operation of apparatus 100, the ceramic slabs 800 that advance on the conveyor line 105 can have different features, for example in terms of size (format), type of decoration or others.

These ceramic slabs 800 are then sorted by the industrial robots 140 so as to create groups of ceramic slabs 800 sharing homogeneous features, such as the same size, the same type of decoration or others.

In particular, a control system (not shown) is configured to identify the ceramic slabs 800 that have certain features and to control each industrial robot 140 to selectively pick up from the conveyor line 105 precisely those ceramic slabs 800 and transfer them onto the loading platform 130 of one of carriages 125, optionally stacking them to form stacks consisting of a predetermined number of ceramic slabs 800 having homogeneous features.

In order to identify the features of the ceramic slabs 800, the control system can use cameras or other optical or mechanical recognition systems, which are not described herein as they are per se conventional and are known to the man skilled in the art.

Each industrial robot 140 may for example be actuate to pick up only the ceramic slabs 800 that have a certain feature or to pick up ceramic slabs 800 with different features and arrange them each time on a different carriage 125 and/or in a different stack aboard a same carriage 125.

The industrial robots 140 may further be actuated one at a time or simultaneously, for example in order to handle ceramic slabs 800 having different features or simply in order to sort a larger number of ceramic slabs 800.

It is therefore clear that apparatus 100 allows great flexibility of use, since using suitable programming of the control system of the industrial robots 140, it is possible to treat a large number of ceramic slabs 800 and/or a wide range of ceramic slabs 800 having different features.

In any case, after a carriage 125 has been appropriately loaded with one or more stacks of ceramic slabs 800, the control system can control said carriage 125 to move towards one of the stationing areas 165 or 170, such as the one that is closest.

When carriage 125 is in this stationing area 165 or 170, the industrial robot 175 is controlled by the control system to pick up a whole stack of ceramic slabs 800 from the loading platform 130 (i.e. one stack at a time) and then transfer it and drop it onto the second conveyor line 155, which is subsequently moved away.

Once it has been unloaded, the control system controls carriage 125 to return to one of the stationing areas 115 or 120, so as to be loaded again.

During all these steps, the conveyor line 105 and the second conveyor line 155 can be operated continuously, while carriages 125 come and go from the stationing areas 115 and 120 to the stationing areas 165 and 170, ensuring that the selection, stacking and removal process of the stacks of ceramic slabs 800 always takes place in a continuous and as uniform as possible manner.

Due to the fact that the loading platform 130 of carriages 125 may vary its height (elevation), carriages 125 can pass below the first conveyor line 105. With this device, it is possible to program carriages 125 so that their trajectories have no intersections points or so that the intersection points are few. For example, when the loading platform 130 is full with ceramic slabs 800, carriages 125 directed towards the stationing areas 165 and 175 can pass laterally to outside the conveyor line 105. When vice versa carriages 125 return back towards the stationing areas 115 and 120, they can pass longitudinally below the conveyor line 105, without hindering carriages 125 coming up.

It is also noted that, in order to increase productivity, apparatus 100 described above may be combined with other apparatus 100 of the same type, creating a complex machinery where each apparatus can be for example intended to serve a respective packaging system located downstream.

In this case, i.e. when there is multiple apparatus 100 arranged in parallel, using the industrial robots 140 and 175 and the automated guided carriages 125 makes it advantageously possible to transfer the ceramic slabs 800 between different apparatus 100 in an extremely flexible manner.

For example, after the industrial robots 140 of a first apparatus 100 have loaded the ceramic slabs 800 coming from the respective conveyor line 105 onto carriages 125 that are located in the respective stationing areas 115 and 120, said carriages 125 can carry said ceramic slabs 800 towards one of the stationing areas 165 and 170 of a second, different apparatus 100 where the ceramic slabs 800 are picked up by the corresponding industrial robot 175 and placed on the corresponding conveyor line 155.

Such a solution may advantageously be used for example when the packaging system which belongs to the first apparatus 100 is under maintenance, since the ceramic slabs 800 can still be packaged using the packaging plant associated with the second apparatus 100, without reducing productivity.

Other than that, the possibility of moving the ceramic slabs 800 among the various apparatuses 100 allows increasing the flexibility of the entire machinery and its productivity.

Of course, a man skilled in the art may make several technical application changes to apparatus 100 described above, without thereby departing from the scope of the invention as claimed hereinafter.

## Claims

1. An apparatus (100) for sorting objects (800), comprising:
- a conveyor line (105) able to advance the objects (800) to be sorted,
- at least a carriage (125) able to support one or more stacked objects (800), and
- at least an industrial robot (140) able to pick up at least an object (800) at a time from the conveyor line (105) and transfer the object (800) onto the carriage (125).

2. The apparatus (100) of claim 1, comprising a plurality of carriages (125) each of which is able to support one or more stacked objects (800).

3. The apparatus (100) of claim 2, comprising a plurality of industrial robots (140) able to pick up the objects (800) in different positions along the conveyor line (105) and to transfer the objects (800) onto the carriages (125).

4. The apparatus (100) of claim 3, comprising a plurality of stationing areas (115, 120) arranged by a flank of the conveyor line (105), each of which is able to be occupied by at least a carriage (125) and internally of each of which each carriage (125) is able to receive at least an object (800) on the fly from an industrial robot (140).

5. The apparatus (100) of claim 4, wherein the stationing areas (115, 120) are arranged on both sides of the conveyor line (105).

6. The apparatus (100) of any one of the preceding claims, wherein each carriage (125) can be a self-propelling vehicle or can be drawn by a self-propelling vehicle.

7. The apparatus (100) of claim 6, wherein the self-propelling vehicle is a vehicle having automatic drives.

8. The apparatus (100) of any one of the preceding claims, further comprising:
- a second conveyor line (155),
- at least a stationing area (165) arranged by a flank of the second conveyor line (155) and able to be occupied by at least a carriage (125), and
- an industrial robot (175) able to pick up at least a stack of objects (800) which is located in the stationing area (165) and to transfer the stack of objects (800) onto the second conveyor line (155).

9. The apparatus (100) of claim 8, comprising two stationing areas (165, 170) arranged by a flank and on opposite sides of the second conveyor line (155).

10. The apparatus (100) of any one of the preceding claims, wherein each industrial robot (140, 175) is a robot having an articulated arm.
